# EUROPEAN PATENT APPLICATION

(11) **EP 3 508 391 A1**
(43) Date of publication of application: **10.07.2019**
(21) Application number: 19150812.6
(22) Date of filing: 08.01.2019
(51) Int. Cl.: B60W 30/02, B60W 40/09, B60W 50/08, B60W 50/00

(54) **A SYSTEM AND METHOD TO ENHANCE THE DRIVING PERFORMANCE OF A LEANABLE VEHICLE**

(30) Priority: 08.01.2018 US 201862615005 P
(71) Applicant: Low, Thomas, Menlo Park, CA 94025 (US); Knoth, Bruce, Menlo Park, CA 94025 (US); Foster, Brian, Menlo Park, CA 94025 (US); Zhao, Huihua, Menlo Park, CA 94025 (US); Gaudreault, Martin, Menlo Park, CA 94025 (US); YAMAHA HATSUDOKI KABUSHIKI KAISHA, Iwata-shi, Shizuoka 438-8501 (JP)
(72) Inventor: LOW, Thomas, Menlo Park, CA 94025 (US); KNOTH, Bruce, Menlo Park, CA 94025 (US); FOSTER, Brian, Menlo Park, CA 94025 (US); ZHAO, Huihua, Menlo Park, CA 94025 (US); GAUDREAULT, Martin, Menlo Park, CA 94025 (US)
(74) Representative: Grünecker Patent- und Rechtsanwälte PartG mbB

(57) **Abstract**

A system and method are discussed to enhance the driving performance of a leanable vehicle. The system includes a leanable vehicle interface to receive input from the driver, a sensor interface to receive inputs from sensors on the leanable vehicle. The system also includes a computing module to use the sensor data in combination data from the leanable vehicle interface to calculate the driver behavior to produce a future desired performance, such as a desired aggressiveness and a future position, so that the performance of the leanable vehicle is optimized. The calculation may be done using a machine learning method, a rule based methods or both.

## Description

The present invention relate to a system and method to enhance the driving performance of a leanable vehicle.

More particularly, an aspect of an embodiment relates to improving the performance of a leanable vehicle by calculating the driver behavior necessary to produce a desired performance, where the desired performance is based on in part a measure of desired aggressiveness and a target path.

Leanable vehicles, such as motorcycles, are a popular form of transportation. Leanable vehicles are also used in the racing industry as a form of entertainment. In many situations, there is a need to improve performance. In other situations, there is a need to improve overall comfort level regardless of the performance. Comfort level can include, among other things, the level of safety for the driver, the apparent level of safety for the driver, the level of wear incurred by the leanable vehicle (e.g., tire wear, engine wear, drivetrain wear), and/or the level of safety for objects in the environment of the leanable vehicle. A leanable vehicle is typically driven by the driver who relies on his or her intuition and senses to make decisions. Therefore, a leanable vehicle driver may not always accurately assess the situation, and either performance or driver comfort is compromised..

It is the object of the present invention to provide system and method to enhance the driving performance of a leanable vehicle that can improve the performance and comfort level of the leanable vehicle and the driver. According to the present invention said object is solved by a system to enhance a driving performance of a leanable vehicle having the features of independent claim 1. Moreover, said object is also solved by a method to enhance a driving performance of a leanable vehicle having the features of independent claim 13. Preferred embodiments are laid down in the dependent claims.

Provided herein are some embodiments. The performance and comfort level of the leanable vehicle and the driver, independently or in combination, may be enhanced by systems that use machine learning or rule based methods (or both) to assist in the decision-making process. The comfort level of the leanable vehicle and driver can include, among other things, the level of safety for the driver, the apparent level of safety for the driver, the level of fishtailing, degree of wheel contact with the road, likelihood of vehicle tip-over, level of location and/or orientation oscillation, or other measures of instability of the operation of the leanable vehicle, the level of wear incurred by the leanable vehicle (e.g., tire wear, engine wear, drivetrain wear), and/or the level of safety for objects in the environment of the leanable vehicle. These systems may gather data and learn from the actual driving situations and predict how the leanable vehicle will behave in the future. The learned knowledge may then be applied to maximize the desired performance of the leanable vehicle.

In an embodiment, the design is directed to a system to enhance the driving performance of a leanable vehicle. The system includes a leanable vehicle interface to receive input from the driver such as acceleration, direction, bank angle, steering angle and steering angle rate, and outputs to the leanable vehicle steering, throttling, clutching, shifting and braking. The system also includes a sensor interface to receive inputs from sensors on the leanable vehicle, and outputs sensor data. The system includes a computing module to receive the sensor data from the sensor interface and use both the sensor data and data from the leanable vehicle interface to calculate the driver behavior to produce a future desired performance, such as a desired aggressiveness and a future position, so that the performance of the leanable vehicle is optimized.

In another embodiment, the system also includes a state estimator to receive the sensor data from the sensor interface. The state estimator can calculate a kinetic state of the leanable vehicle. In addition, the system can also contain a dynamic leanable vehicle model module to receive the kinetic state from the state estimator and external data. The dynamic leanable vehicle model module uses either the kinetic state, external data or both to calculate a physics model of the leanable vehicle and driver. In addition, the system can contain an aggressiveness engine to receive an aggressiveness index and the kinetic state, and calculate an aggressiveness factor. The system can also contain a path follower module to receive the kinetic state from the state estimator, the calculated aggressiveness factor from the aggressiveness engine and the external data such as a future position, in order to calculate the target path. The system can also contain a model based controller to receive and use the calculated physics model, the calculated aggressiveness factor and the calculated target path, along with at least one of a rule based model and machine learning based model to determine the target acceleration.

In another embodiment the system can use a calculated target path and target acceleration to determine what behavior modification is necessary to achieved the desired performance. The target path and target acceleration can be calculated using either a rule based model or a machine learning based model.

These and other features of the design provided herein can be better understood with reference to the drawings, description, and claims, all of which form the disclosure of this patent application.

### BRIEF DESCRIPTION OF THE DRAWINGS

The multiple drawings refer to the example embodiments of the design.
Figure 1 illustrates an exemplary functional block diagram of a system of enhancing leanable vehicle driving performance.
Figure 2 illustrates one embodiment configuration of the computing module.
Figure 3 illustrates one embodiment architecture that is applicable to both a machine learning model and a rule based model.
Figure 4 illustrates an example computing systems in accordance with some embodiments.
Figure 5 illustrates one or more networks in accordance with some embodiments.
Figure 6a and 6b illustrate flow diagrams of an embodiment of a system to enhance the driving performance of a leanable vehicle.

### DETAILED DISCUSSION

In the following description, numerous specific details are set forth, such as examples of specific data signals, named components, etc., in order to provide a thorough understanding of the present design. It will be apparent, however, to one of ordinary skill in the art that the present design can be practiced without these specific details. In other instances, well known components or methods have not been described in detail but rather in a block diagram in order to avoid unnecessarily obscuring the present design. Further, specific numeric references such as a first sensor and a first leanable vehicle can be made. However, the specific numeric reference should not be interpreted as a literal sequential order but rather interpreted that the first sensor is different than a second sensor. Additionally, specific reference to the leanable vehicle and driver are set forth. However, it would be apparent to one of ordinary skill in the art that the leanable vehicle may also include one or more riders. Thus, the specific details set forth are merely exemplary. Also, the features implemented in one embodiment may be implemented in another embodiment where logically possible. The specific details can be varied from and still be contemplated to be within the spirit and scope of the present design.

The leanable vehicle has many features and some example features will be discussed below.

In general, the system enhances a leanable vehicle driving performance by using inputs from the driver, sensors, and leanable vehicle to calculate the driver behavior necessary to produce a future desired performance, such as a desired aggressiveness and a future position.

A leanable vehicle may be a vehicle that has two, three or more wheels that is capable of leaning during operation or while standing still. For example, a vehicle such as a motorcycle may be considered a leanable vehicle due to the fact that the motorcycle can deviate from being perpendicular to the ground as it is driven or stands still. Similarly, a three wheel scooter or motorcycle may also be considered a leanable vehicle due to its ability to be at an incline while driving. Any of these leanable vehicles may tilt during operation or while standing still.

In one embodiment, the system includes a leanable vehicle interface to receive input from the driver such as acceleration, direction, bank angle, steering angle and steering angle rate, and outputs to the leanable vehicle steering, throttling, clutching, shifting and braking. The system also includes a sensor interface to receive inputs from sensors on the leanable vehicle and outputs sensor data in a form that can be used by the system. The system includes a computing module to receive the sensor data from the sensor interface in addition to data from the leanable vehicle interface to calculate the driver behavior to produce a future desired performance, such as a desired aggressiveness and a future position, so that the performance of the leanable vehicle is optimized.

In another embodiment, the system also includes a state estimator to receive the sensor data from the sensor interface. The state estimator can calculate a kinetic state of the leanable vehicle. In addition, the system can also contain a dynamic leanable vehicle model module to receive the kinetic state from the state estimator and external data. The dynamic leanable vehicle model module uses either the kinetic state, external data or both to calculate a physics model of the leanable vehicle and driver. In addition, the system can contain an aggressiveness engine to receive an aggressiveness index and the kinetic state, and calculate an aggressiveness factor. The system can also contain a path follower module to receive the kinetic state from the state estimator, the calculated aggressiveness factor from the aggressiveness engine and the external data such as a future position, in order to calculate the target path. The system can also contain a model based controller to receive and use the calculated physics model, the calculated aggressiveness factor and the calculated target path, along with at least one of a rule based model and machine learning based model to determine the target acceleration.

In another embodiment the system can use a calculated target path and target acceleration to determine what behavior modification is necessary to achieved the desired performance. The target path and target acceleration can be calculated using either a rule based model or a machine learning based model.

In another embodiment, the system can receive external data such as weather, road conditions, road hazards and use that information in the calculations in order to enhance future performance.

In another embodiment, the system can use information obtained about past performance in the calculations in order to enhance future performance.

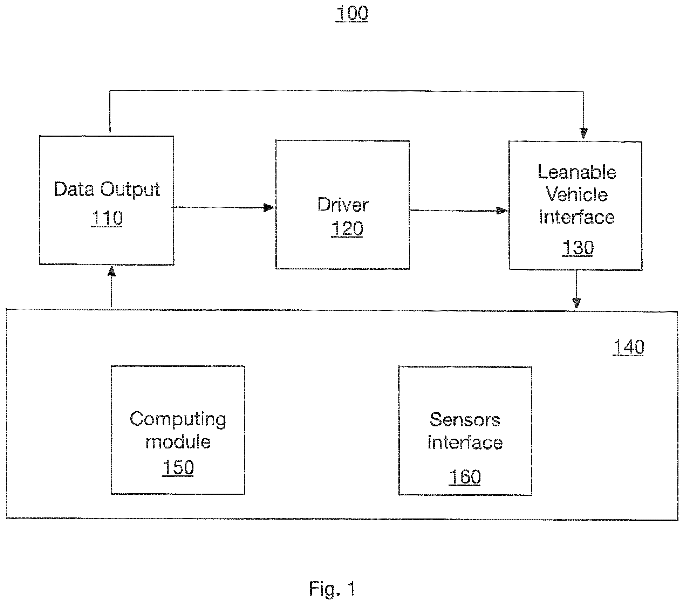

Figure 1 illustrates a functional block diagram of a leanable vehicle and a driver (120), where the operation of a leanable vehicle includes a machine learning capability. As will be explained below, the functional block that provides the machine learning capability may be configured in several ways including being implemented within the leanable vehicle, in a cloud computing environment, in a robot if the driver is a robot, in an off-line manner or a combination one or several of the configurations listed. As shown in Figure 1, the functional block in the leanable vehicle includes a computing module (150) and a sensor interface (160) (other blocks may also exist in practice). The driver (120) drives the leanable vehicle using the leanable vehicle interface (130).

In one embodiment the leanable vehicle interface (130) can include steering (260), brake (280), etc. Data or other information computed or obtained by the functional blocks within the leanable vehicle may be communicated to the driver (120) through the data output (110). The data output (110) may include a display such as but not limited to a dashboard, a wireless output, etc. As mentioned above, the driver (120) may be a robot or a human driver. Further, the driver (120) and leanable vehicle may be driven in various location including but not limited to racetracks, or roads and highways and off-road locations. Also, the computing module (150) may be configured in multiple ways including being self-contained within the driver (120) (if the driver is a robot) or within the leanable vehicle or being distributed amongst both.

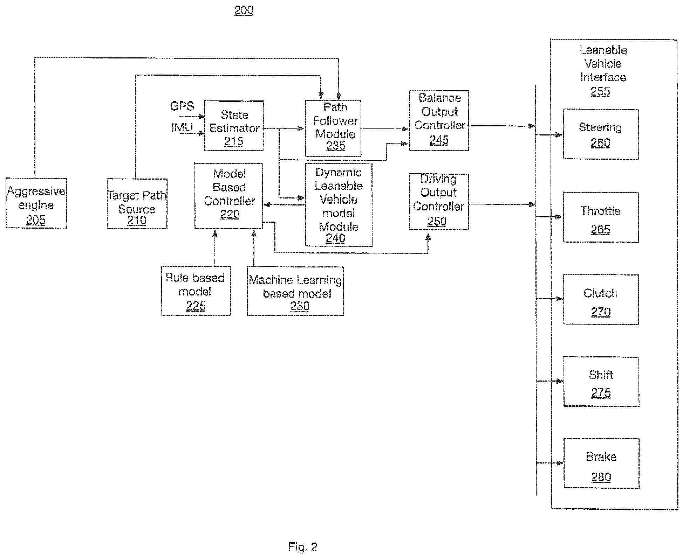

Figure 2 illustrates one embodiment of the computing module (150). As stated earlier, this computing module (150) may be configured in various ways. Also, the computing module (150) may be implemented within the leanable vehicle or within the driver (120), if the driver is a robot, or may be implemented across multiple components. As illustrated in Figure 2, the leanable vehicle interface (130) gets its input from one or multiple output controllers. The Figure shows two output controllers - the balance output controller (245) and the driving output controller (250). The output controllers generate commands that are sent to the leanable vehicle interface (130), based on calculations that occur within the controllers. In alternative embodiments, instructions can be sent to the leanable vehicle driver instead of or in addition to the commands sent to the leanable vehicle interface (130), or both. More details about these output controllers will be provided below. In additional embodiments, there may be more or fewer output controllers.

In one embodiment the computing module (150) is implemented within the robot (acting as a driver), and the robot actuates the leanable vehicle interface to control the leanable vehicle.

In another embodiment the computing module (150) is implemented within the leanable vehicle, and one of multiple techniques of actuating the leanable vehicle interface (130) is utilized.

In another embodiment, an internal control module may control the leanable vehicle interface (130). This may be done by coupling an internal control module to the leanable vehicle interface (130) such that all controls are completely enclosed within the leanable vehicle.

In another embodiment, a display screen may be used to communicate information to a human driver who may then choose to act accordingly.

In another embodiment, a combination of internal control and actuation through a driver (120) (robot or human) may be utilized.

In some embodiments, the leanable vehicle is configured with a machine-readable storage medium to store information such as calculated target acceleration, calculated target path, kinetic state, calculated aggressiveness factor, driver inputs, and external data for later retrieval and analysis. Such a configuration can allow a driver to review their performance on a previous occasion when the leanable vehicle was driven and take that information into account during future occasions when the leanable vehicle is driven. For example, the leanable vehicle driver may be able to determine whether the performance could have been modified to be more comfortable or more aggressive and utilize this information to change driving behavior on future driving occasions.

As stated above, the output controllers generate commands that control the operation of the leanable vehicle through the leanable vehicle interface (130). In alternative embodiments, instructions can be sent to the leanable vehicle driver (120) that are human interpretable instructions. These instructions can be sent instead or in addition to the commands sent to the leanable vehicle interface (130). The balance output controller (245) generates commands to control steering (260). Alternatively, an instruction on how to control steering (260) can be sent to the driver (120). The balance output controller generates a command that produces a torque that is subsequently applied to the steering (260). The inputs of the balance output controller (245) are the target bank angle provided by the path follower module (235), the current leanable vehicle velocity, the steering angle, the steering angle rate and the suspension position. The last three parameters are utilized to adjust the steering torque that is applied when the front wheel is almost fully unloaded. At all times, the balance output controller (245) assumes that the wheels of the leanable vehicle are in contact with the ground, except for the aforementioned situation.

The driving output controller (250) generates additional commands that control the operation of the leanable vehicle through the leanable vehicle interfaces (130). The driving output controller (250) may generate commands including but not limited to controls that control the throttle (265), the shift (275), the clutch (270), and the brake (280), which can be the front or rear brake.. Similarly, instructions can be sent to the driver (120) on how to control the above-mentioned items. In contrast to the balance output controller (245), the input to the driving output controller is velocity and acceleration. One function of this block is to apply a velocity or acceleration profile (or both) such that one or multiple specific criteria are met. As an example, one criterion may be to improve lap time. Another criterion may be to drive in comfort mode.

The path follower module (235) functional block produces the path delta command. The input to the path follower module (235) functional block includes the planned path, the current position of the path, the kinetic state and the aggressiveness factor (explained below).

The dynamic leanable vehicle model module (240) functional block provides a physics model of the leanable vehicle and the driver (120). This model includes many properties of the leanable vehicle such as its center of gravity, its wheelbase, caster angle, trail, tire width, wheel inertia and so forth. Those properties are used by the path follower module (235) to convert turn radius to actual bank angle and to adjust the bank angle command based on the tire width. The balance output controller (245) also uses this model to compensate gyroscopic effects caused by the rotation of the front wheel.

The state estimator (215) functional block calculates the position and velocity of the leanable vehicle given position data. It may also retain the prior state and use that information to predict the current state. Position data can be inputs such as GPS, IMU and Lidar devices or can be calculated based on measuring the position of the leanable vehicle relative to a landmark with a previously determined position. Measurement of the leanable vehicle position relative to a known landmark can be done in a number of ways including using stereovision for visual based landmark or using multilateration for radio based landmarks.

The calculations within the model based controller (220) functional block may include the appropriate acceleration to be applied at any particular moment and location. Acceleration calculations also include calculation of the deceleration profiles. The appropriate acceleration profiles may be determined by goals that are set by the aggressiveness engine (205). To explain this further, the aggressiveness engine (205) provides an aggressiveness index based on the driver (120) input. Thus, a high aggressiveness index, meaning that the driver (120) wants to ride more aggressively, may cause the model based controller (220) to calculate accelerations that are closer to the maximum possible acceleration.

As illustrated in Figure 2, there are multiple ways to configure the model based controller (220). In one embodiment, a rule based model (225) may be utilized. In this model, for a specific aggressiveness index, for a specific location, a specific acceleration may be specified. Thus, a table such as Table 1 may be utilized within such a model.

**Table 1**

| Aggressiveness Index | GPS Loc | Acceleration |
|---|---|---|
| *Aᵢ* | *Latₚ, Longₚ* | *D1* |
| *Aᵢ* | *Latₚ₊₁, Longₚ₊₁* | *D2* |
| ... | ... | ... |

In this table, for an aggressive index Ai, for specific latitude (lat) and longitude (long), a specific acceleration such as D1 may be applied. The accelerations may be calculated a priori based on prior experimentation or modeling or other techniques. Thus, in a racetrack, higher aggressive index may be used, as commanded by a driver (120). In normal non-racetrack driving, this table may also be used to ensure comfortable driving. More explanation of these examples is provided below.

In one embodiment, a machine learning based model (230) may be utilized for the model based controller (220). Here, in contrast to the rule based model (225), a machine learning based model (230) may learn the optimal acceleration to be applied at a particular location. Further, the machine learning may include other parameters such as environmental conditions, time of day, etc. As stated above, more explanation of the rule based driving and machine learned based driving are provided below.

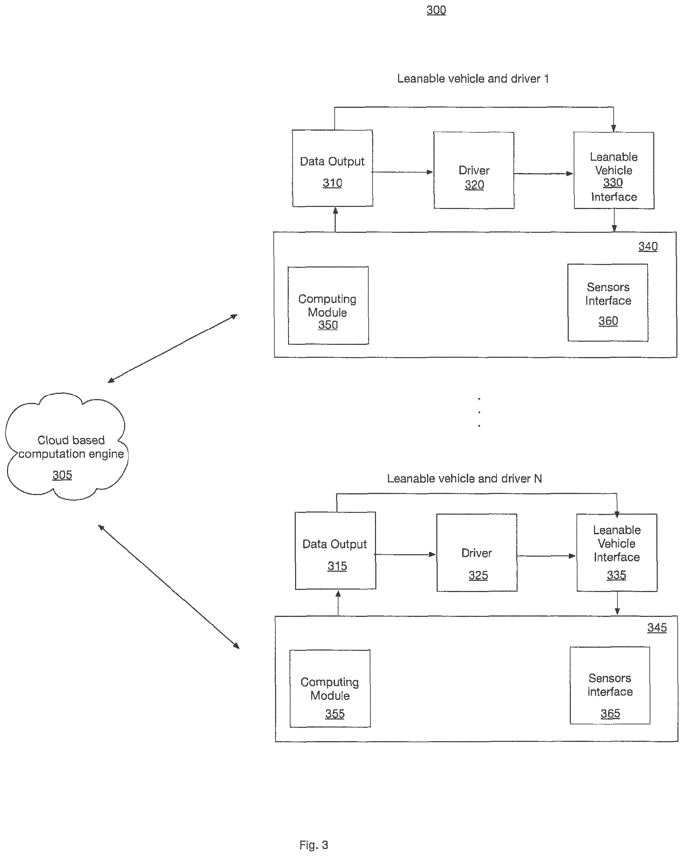

While Figure 2 provides one specific configuration of the computing module (150), Figure 3 provides a more general architecture that is applicable to both a machine learning based model (230) and a rule based model (225). In Figure 3, multiple leanable vehicle and driver sets are illustrated although all concepts apply even if there is one set. Also, although a cloud based computation engine (305) is illustrated, as shown in Figure 2 the cloud facility is not required. The machine learning concepts and the rule based concepts are now presented within the context of Figure 3 with the understanding of the comments above.

### Machine learning

The machine learning computation may occur within the leanable vehicle or within the driver (120) (if the driver is a robot), within the cloud computation engine (305), or some combination. In one embodiment, the GPS, the environmental data, and the state of the leanable vehicle are recorded within the computation module (1500). In a normal everyday use, the comfort level of the leanable vehicle would be also recorded for this set of data. The comfort level may be categorized into multiple categories such as but not limited to "Comfortable," "Uncomfortable," "near the edge of discomfort" etc. For this example, if the leanable vehicle did not slip, the comfort level would be recorded as "Comfortable." In contrast, if the leanable vehicle did slip or was beginning to slip, then a comfort level of "Uncomfortable" or "near the edge of discomfort" may be more appropriate. The computing module (150) may determine the appropriate comfort level condition based on the data from the sensor interface (160). As an example, if the wheels are not spinning at the same revolutions per minute (within a programmable adjustable threshold that may be stored), then the computing module (150) may determine that the leanable vehicle was slipping with the environmental and the internal controls imposed on the leanable vehicle. With this data set stored, the next time these same set of conditions or similar set of conditions are encountered either by this particular leanable vehicle and driver or by a different leanable vehicle and driver, this knowledge can be made known to the driver (robotic or human) or to the internal control mechanisms prior to reaching that specific location such that appropriate actions may be taken in driving through this location. The role of the machine learning functional block in this case may range widely from making a determination if the current set of conditions is similar to a condition that has been encountered in the past to deriving information that may be broadly applicable to all drivers, regardless of what type of leanable vehicle is being driven. An example of such derived information is the coefficient-of-friction of the surface at a particular location; this information is largely independent of the leanable vehicle. The effective coefficient-of-friction which also depends on the leanable vehicle may then be calculated within the computing module (150); this may be accomplished as the kinetic model of the leanable vehicle would be known to itself.

In one embodiment the machine leaning functional block is to aggregate and analyze data from multiple leanable vehicles and drivers. As multiple leanable vehicles and drivers go through various locations, various data such as but not limited to the environmental data, the leanable vehicle state data, the comfort level data are collected and may be transmitted to the cloud based computation engine (305). This engine may also include a machine learning functional block that may accomplish a broad range of computations. As more data may be available for the same location, the confidence in the derived calculations such as but not limited to the coefficient-of-friction may increase. Additionally, data from more locations could become available. Further, the data may be disseminated to one or multiple leanable vehicle and driver sets as required.

The example above discussed the use of machine learning in normal everyday use. One benefit of such learning is to improve the driver comfort level as more data about the roads may become available. Another example is discussed below where the situation is on a racetrack.

In a racetrack situation, one primary goal is to reduce the lap time. In a racetrack, the entire track may be characterized in terms of location and other characteristics such as but not limited to coefficient-of-friction. Also, in a racetrack situation, the curves of the track present challenging situations as appropriate acceleration and deceleration through a turn may make a significant impact on the lap timing. Thus, one technique to improve the lap time is to use a machine learning based model (230).

In one embodiment, during the training period, the machine learning based model (230) functional block may acquire environmental and internal data. Initially, during this training period, the aggressiveness index may be set to a low value deliberately so that training data may be acquired. With the aggressiveness index low, the leanable vehicle may operate at some lower percentage such as 50% of its maximum capability. With additional laps, the aggressiveness index may be increased automatically in steps or manually. Each time, the machine learning based model (230) functional block learns some new data such as but not limited to when to start decelerating into a turn and accelerating out of turn. In some instances, when there is no danger of losing balance, the aggressiveness index may push the leanable vehicle performance to its absolute limit. Derived information such as but not limited to coefficient-of-friction may then converge to a true value with such trials. Eventually, with multiple trials, it may be possible for the machine learning based model (230) functional block to suggest the most optimal route, the most optimal acceleration and deceleration profiles for each location on the track.

Depending on the kinematic modeling of leanable vehicles and their drivers, it may be possible to use all or some of the above result on a different leanable vehicle and driver set. This may be advantageous, as the learning from one leanable vehicle and their driver may be applied to a different set, the second set perhaps requiring a smaller amount of training time.

### Rule based performance

As noted above and illustrated in Figure 2, in one embodiment the computing module (150) may include a rule based model (225) functional block. In contrast to the machine learning based model (230) functional block, the rule based model (225) functional block utilizes one or multiple of look-up-tables, formulas, or other heuristic tools. However, in some configurations, advantages may be realized by using rule based methods either by itself or in combination with the machine learning methods.

In one embodiment during normal everyday driving, where comfort is one primary concern, the heuristic data (that may include observational data), may be linked to specific locations; this data may be displayed or acted upon by the driver (120) or the internal control mechanisms. To illustrate this with a specific example, through prior observations it may be known that at a particular location, the lane markings are not visible. This could present an uncomfortable situation for the leanable vehicles. Thus, with this knowledge, a rule may be built using tables or other computational methods, that recommends an alternate route.

This example may be used to compare and contrast the rule based methods and the machine learning based methods. The machine learning based methods may be able to predict the environmental situation based on machine vision through sensors (cameras) installed on the leanable vehicles without a human-in-the-loop. The rule based methods may require a human in the loop to interpret the data and make such a determination.

In the example of a racetrack, rule based model (225) may be similarly associated with each location on the track. The most appropriate velocity or acceleration may be recorded based on prior experimentation. A human-in-the-loop may be necessary to make a decision on which set tables or heuristic knowledge to apply. In contrast, the machine learning based model (230) may not need to have the human-in-the-loop; decisions may be made in a real-time or in a semi real-time manner.

As each the rule based model (225) and the machine learning based model (230) have their own advantages in one embodiment, both methods may be utilized in combination. In the training period, the leanable vehicle may be operated with the rule based model (225). However, as more data becomes available, the tables may be modified, or new tables may be created with the machine learning based model (230). An additional advantage of this may be realized when sufficient data is not available for the machine learning based model (230). This may happen for example in the normal everyday driving, in locations that are remote or not frequented by drivers. Here a location agnostic rule based method may be used, but as more and more data becomes available, machine learning may be used.

### Network

A number of vehicles, such as leanable vehicles, back-end systems, electronic systems and devices can communicate with each other in a network environment (590) in accordance with the embodiments discussed herein. The network environment has a communications network. The network can include one or more networks selected from an optical network, a cellular network, the Internet, a Local Area Network ("LAN"), a Wide Area Network ("WAN"), a satellite network, a fiber network, a cable network, and combinations thereof. In some embodiments, the communications network is the Internet. There may be many server computing systems and many client computing systems connected to each other via the communications network.

The communications network can connect one or more server computing systems selected from at least a first server computing system and a second server computing system to each other and to at least one or more client computing systems as well. The server computing systems can each optionally include organized data structures such as databases. Each of the one or more server computing systems can have one or more virtual server computing systems, and multiple virtual server computing systems can be implemented by design. Each of the one or more server computing systems can have one or more firewalls to protect data integrity.

The at least one or more client computing systems can be selected from a first leanable vehicle (511), a second leanable vehicle (512), a first mobile computing device (530) (e.g., smartphone with an Android-based operating system), a second mobile computing device (e.g., smartphone with an iOS-based operating system - not shown in the Figure), a first wearable electronic device (550) (e.g., a smartwatch), a first laptop computer (580), a first tablet (520), a first desktop (570) and the like. The client computing system can include, for example, the software application or the hardware-based system in which may be able exchange communications with the first leanable vehicle (511), and/or the second leanable vehicle (512). Each of the one or more client computing systems can have one or more firewalls to protect data integrity.

It should be appreciated that the use of the terms "client computing system" and "server computing system" is intended to indicate the system that generally initiates a communication and the system that generally responds to the communication. For example, a client computing system can generally initiate a communication and a server computing system generally responds to the communication. No hierarchy is implied unless explicitly stated. Both functions can be in a single communicating system or device, in which case, the client-server and server-client relationship can be viewed as peer-to-peer. Thus, if the first laptop computer (580) (e.g., the client computing system) and the server computing system can both initiate and respond to communications, their communications can be viewed as peer-to-peer. Additionally, the server computing systems include circuitry and software enabling communication with each other across the network.

Any one or more of the server computing systems can be a cloud (540). A cloud provider can install and operate application software in a cloud and cloud users can access the application software from one or more of the client computing systems. Generally, cloud users that have a cloud-based site in the cloud cannot solely manage a cloud infrastructure or platform where the application software runs. Thus, the server computing systems and organized data structures thereof can be shared resources, where each cloud user is given a certain amount of dedicated use of the shared resources. Each cloud user's cloud-based site can be given a virtual amount of dedicated space and bandwidth in the cloud. Cloud applications can be different from other applications in their scalability, which can be achieved by cloning tasks onto multiple virtual machines at run-time to meet changing work demand. Load balancers distribute the work over the set of virtual machines. This process is transparent to the cloud user, who sees only a single access point.

Cloud-based remote access can be coded to utilize a protocol, such as Hypertext Transfer Protocol ("HTTP"), to engage in a request and response cycle with an application on a client computing system such as a web-browser application resident on the client computing system. The cloud-based remote access can be accessed by a smartphone, a desktop computer, a tablet, or any other client computing systems, anytime and/or anywhere. The cloud-based remote access is coded to engage in 1) the request and response cycle from all web browser based applications, 3) the request and response cycle from a dedicated on-line server, 4) the request and response cycle directly between a native application resident on a client device and the cloud-based remote access to another client computing system, and 5) combinations of these.

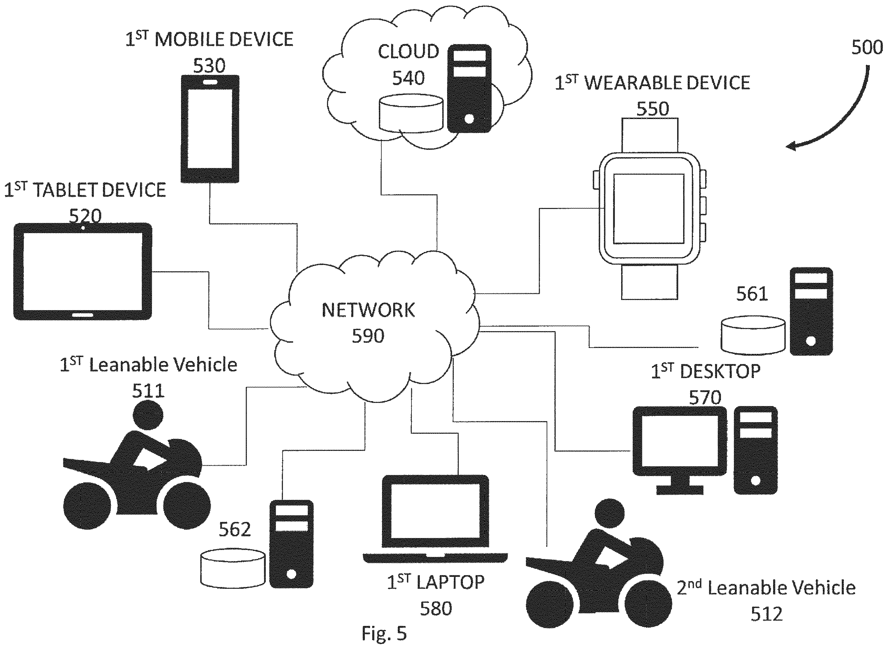

As can be seen in Figure 5, a cloud computational engine (305) as discussed in Figure 3, can be implemented in the server in the cloud (540). In the cloud based computing scenario, various data such as but not limited to the environmental data, the leanable vehicle state data, the comfort level data are collected and may be transmitted to the cloud using any one of the communication methods described above. This engine may also include a machine learning based model (230) functional block that may accomplish a broad range of computations. As more data may be available for the same location, the confidence in the derived calculations such as but not limited to the coefficient-of-friction may increase. Additionally, data from more locations could become available. Further, the data may be disseminated to one or multiple leanable vehicle and driver sets as required, for example, the first leanable vehicle and the second leanable vehicle. One advantage of such a method is that more powerful computing systems can be used without having to worry about increased weight or weight distribution with such systems.

As discussed above, the cloud based data can reside on the server (561) and accessible to any number of devices, including other leanable vehicles such as illustrated in Figure 5. The distribution of the data allows for information such as changing weather conditions, road hazards, traffic flow patterns to be shared to other devices and used by other devices to aid in the calculation of the necessary behavior for optimal performance.

In some embodiments, the server (561) does not need to be constantly online. The server can remain offline until it is necessary to send commands or instructions.

In some embodiments, the data does not need to come from a leanable vehicle. A driver (120) can enter information such as a desired aggressiveness, current track conditions, driver profile through an app on a mobile device (530) that would be taken into account.

In an embodiment, the server computing system can include a server engine, a web page management component, a content management component, and a database management component. The server engine can perform basic processing and operating-system level tasks. The web page management component can handle creation and display, or routing of web pages or screens associated with receiving and providing digital content and digital advertisements. Users (e.g., cloud users) can access one or more of the server computing systems by means of a Uniform Resource Locator ("URL") associated therewith. The content management component can handle most of the functions in the embodiments described herein. The database management component can include storage and retrieval tasks with respect to the database, queries to the database, and storage of data.

In some embodiments, a server computing system can be configured to display information in a window, a web page, or the like. An application including any program modules, applications, services, processes, and other similar software executable when executed on, for example, the server computing system, can cause the server computing system to display windows and user interface screens in a portion of a display screen space. With respect to a web page, for example, a user via a browser on the client computing system can interact with the web page, and then supply input to the query/fields and/or service presented by the user interface screens. The web page can be served by a web server, for example, the server computing system, on any Hypertext Markup Language ("HTML") or Wireless Access Protocol ("WAP") enabled client computing system or any equivalent thereof. The client computing system can host a browser and/or a specific application to interact with the server computing system. Each application has a code scripted to perform the functions that the software component is coded to carry out such as presenting fields to take details of desired information. Algorithms, routines, and engines within, for example, the server computing system can take the information from the presenting fields and put that information into an appropriate storage medium such as a database (e.g., database). A comparison wizard can be scripted to refer to a database and make use of such data. The applications may be hosted on, for example, the server computing system and served to the specific application or browser of, for example, the client computing system. The applications then serve windows or pages that allow entry of details.

### Computing systems

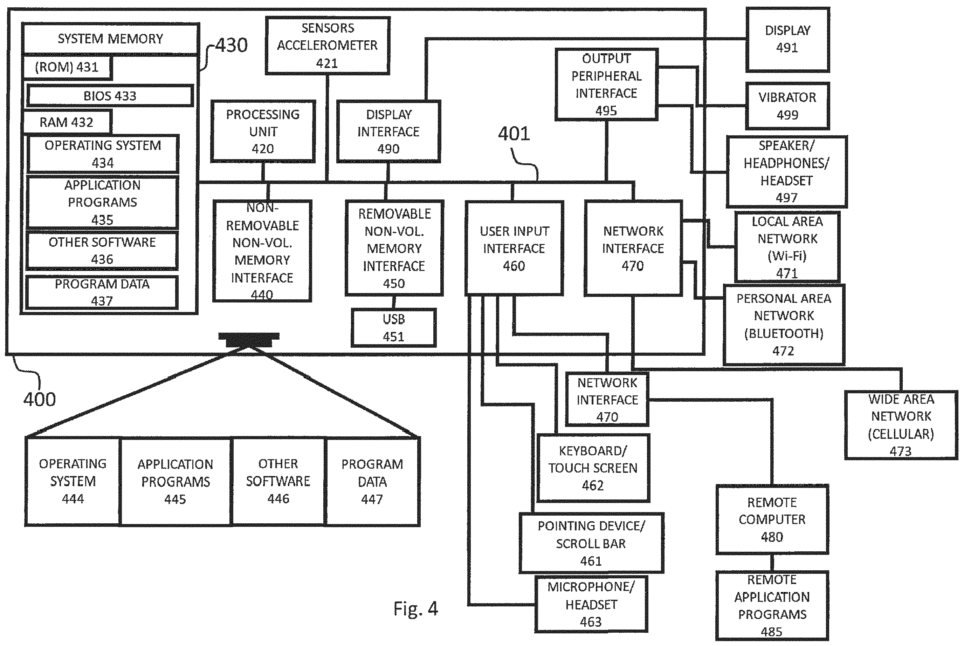

Figure 4 illustrates a computing system that can be implemented with some embodiments of the system for enhancing driving performance of the leanable vehicle. For example, the computing system shown in Fig. 4 can be used to carry out the processes described herein on the leanable vehicle, a robot (acting as a driver) or exist on the devices shown in Figure 5, such as the mobile device (530), tablet device (520) or laptop (580). A computing system can be, wholly or partially, part of one or more of the server or client computing devices in accordance with some embodiments. The computing systems are specifically configured and adapted to carry out the processes discussed herein. Components of the computing system can include, but are not limited to, a processing unit (420) having one or more processing cores, a system memory (430), and a system bus (401) that couple various system components including the system memory to the processing unit. The system bus may be any of several types of bus structures selected from a memory bus or memory controller, a peripheral bus, and a local bus using any of a variety of bus architectures.

The computing system typically includes a variety of computing machine-readable media. Computing machine-readable media can be any available media that can be accessed by computing system and includes both volatile and nonvolatile media, and removable and non-removable media. By way of example, and not limitation, computing machine-readable media use includes storage of information, such as computer-readable instructions, data structures, other executable software or other data. Computer-storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible medium which can be used to store the desired information, and which can be accessed by a computing device. Transitory media such as wireless channels are not included in the machine-readable media. Communication media typically embody computer readable instructions, data structures, other executable software, or other transport mechanism and includes any information delivery media.

The system memory includes computer storage media in the form of volatile and/or nonvolatile memory such as read only memory (431) (ROM) and random-access memory (432) (RAM). A basic input/output system (433) (BIOS) containing the basic routines that help to transfer information between elements within the computing system, such as during start-up, is typically stored in ROM. RAM typically contains data and/or software that are immediately accessible to and/or presently being operated on by the processing unit. By way of example, and not limitation, the RAM can include a portion of the operating system, application programs, other executable software, and program data.

The drives and their associated computer storage media discussed above, provide storage of computer readable instructions, data structures, other executable software and other data for the computing system.

A user may enter commands and information into the computing system through input devices such as a keyboard, touchscreen, or software or hardware input buttons, a microphone, a pointing device and/or scrolling input component, such as a mouse, trackball or touch pad. The microphone can cooperate with speech recognition software. These and other input devices are often connected to the processing unit through a user input interface that is coupled to the system bus, but can be connected by other interface and bus structures, such as a parallel port, game port, or a universal serial bus (USB). A display monitor or other type of display screen device is also connected to the system bus via an interface, such as a display interface. In addition to the monitor, computing devices may also include other peripheral output devices such as speakers, a vibrator, lights, and other output devices, which may be connected through an output peripheral interface.

The computing system can operate in a networked environment using logical connections to one or more remote computers/client devices, such as a remote computing system. The logical connections can include a personal area network ("PAN") (e.g., Bluetooth®), a local area network ("LAN") (e.g., Wi-Fi), and a wide area network ("WAN") (e.g., cellular network), but may also include other networks. Such networking environments are commonplace in offices, enterprise-wide computer networks, intranets and the Internet. A browser application may be resident on the computing device and stored in the memory.

It should be noted that the present design can be carried out on a computing system. However, the present design can be carried out on a server, a computing device devoted to message handling, or on a distributed system in which different portions of the present design are carried out on different parts of the distributed computing system.

Another device that may be coupled to a bus is a power supply such as a DC power supply (e.g., battery) or an AC adapter circuit. As discussed above, the DC power supply may be a battery, a fuel cell, or similar DC power source that needs to be recharged on a periodic basis. A wireless communication module can employ a Wireless Application Protocol to establish a wireless communication channel. The wireless communication module can implement a wireless networking standard.

In some embodiments, software used to facilitate algorithms discussed herein can be embodied onto a non-transitory machine-readable medium. A machine-readable medium includes any mechanism that stores information in a form readable by a machine (e.g., a computer). For example, a non-transitory machine-readable medium can include read only memory (ROM); random access memory (RAM); magnetic disk storage media; optical storage media; flash memory devices; Digital Versatile Disc (DVD's), EPROMs, EEPROMs, FLASH memory, magnetic or optical cards, or any type of media suitable for storing electronic instructions.

Note, an application described herein includes but is not limited to software applications, mobile apps, and programs that are part of an operating system application. Some portions of this description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. These algorithms can be written in a number of different software programming languages such as C, C+, or other similar languages. Also, an algorithm can be implemented with lines of code in software, configured logic gates in software, or a combination of both. In an embodiment, the logic consists of electronic circuits that follow the rules of Boolean Logic, software that contain patterns of instructions, or any combination of both.

It should be borne in mind, however, that all of these and similar terms are to be associated with the appropriate physical quantities and are merely convenient labels applied to these quantities. Unless specifically stated otherwise as apparent from the above discussions, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers, or other such information storage, transmission or display devices.

Many functions performed by electronic hardware components can be duplicated by software emulation. Thus, a software program written to accomplish those same functions can emulate the functionality of the hardware components in input-output circuitry.

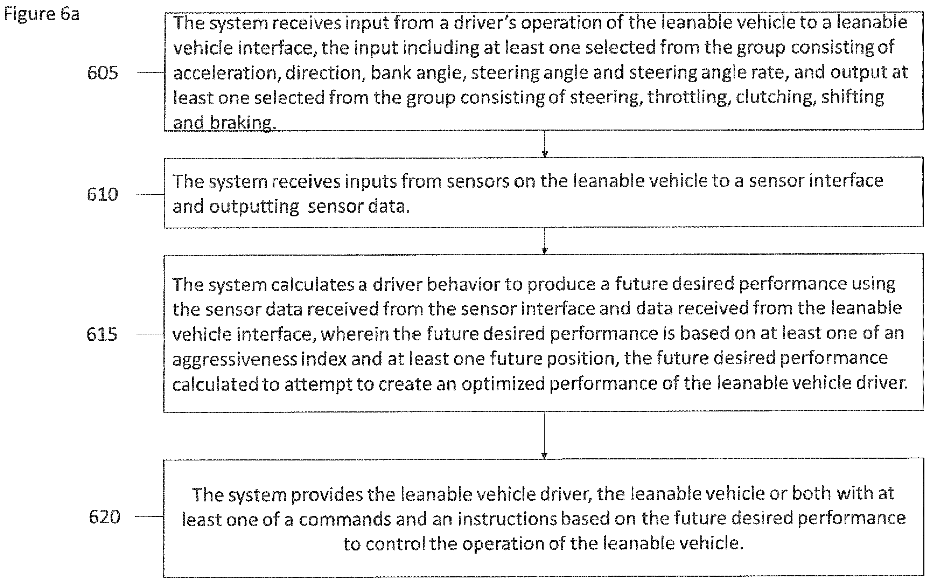

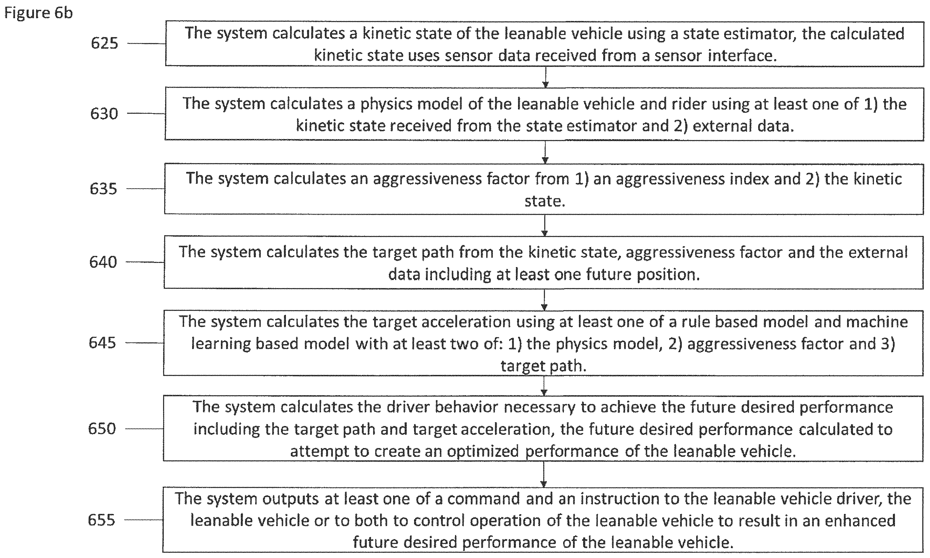

Figure 6a and 6b illustrate flow diagrams of an embodiment of a system to enhance the driving performance of a leanable vehicle. Note, the following steps may be performed in any order where logically possible.

In step 605 of Figure 6a, the system receives input from a driver's operation of the leanable vehicle to a leanable vehicle interface, the input including at least one selected from the group consisting of acceleration, direction, bank angle, steering angle and steering angle rate, and output at least one selected from the group consisting of steering, throttling, clutching, shifting and braking. In step 610, the system receives inputs from sensors on the leanable vehicle to a sensor interface and outputting sensor data. In step 615, the system calculates a driver behavior to produce a future desired performance using the sensor data received from the sensor interface and data received from the leanable vehicle interface, wherein the future desired performance is based on at least one of an aggressiveness index and at least one future position, the future desired performance calculated to attempt to create an optimized performance of the leanable vehicle driver. In step 620, the system provides the leanable vehicle driver, the leanable vehicle or both with at least one of a commands and an instructions based on the future desired performance to control the operation of the leanable vehicle.

In Figure 6b, in step 625, the system calculates a kinetic state of the leanable vehicle using a state estimator, the calculated kinetic state uses sensor data received from a sensor interface. In step 630, The system calculates a physics model of the leanable vehicle and driver using at least one of 1) the kinetic state received from the state estimator and 2) external data. In step 635, the system calculates an aggressiveness factor from 1) an aggressiveness index and 2) the kinetic state. In step 640, the system calculates the target path from the kinetic state, aggressiveness factor and the external data including at least one future position. In step 645, The system calculates the target acceleration using at least one of a rule based model and machine learning based model with at least two of: 1) the physics model, 2) aggressiveness factor and 3) target path. In step 650, the system calculates the driver behavior necessary to achieve the future desired performance including the target path and target acceleration, the future desired performance calculated to attempt to create an optimized performance of the leanable vehicle. In step 655, The system outputs at least one of a command and an instruction to the leanable vehicle driver, the leanable vehicle or to both to control operation of the leanable vehicle to result in an enhanced future desired performance of the leanable vehicle.

## Claims

1. A system to enhance a driving performance of a leanable vehicle comprising:
a leanable vehicle interface (130) configured to receive input from a driver's operation of the leanable vehicle including at least one selected from the group consisting of acceleration, direction, bank angle, steering angle and steering angle rate, and to output at least one selected from the group consisting of steering, throttling, clutching, shifting and braking;
the sensor interface (160) configured to receive inputs from sensors on the leanable vehicle and output sensor data;
a computing module (150) configured to receive sensor data from the sensor interface (160) and data from the leanable vehicle interface (130), the computing module (150) is configured to use the data from both the sensor interface (160) and the leanable vehicle interface (130) to calculate a driver behavior to produce a future desired performance, wherein the future desired performance is based on at least one of an aggressiveness index and at least one future position, the future desired performance calculated to attempt to create an optimized performance of the leanable vehicle;
a data output (110) configured to receive the future desired performance in order to provide at least one of a command and an instruction to the driver or the leanable vehicle interface (130) to control the operation of the leanable vehicle.

2. The system of claim 1, wherein the future desired performance includes at least one of a target path and a target acceleration.

3. The system of claim 1 or 2, wherein the computing module (150) is located on the leanable vehicle.

4. The system of at least one of the claims 1 to 3, wherein the computing module (150) comprises:
a state estimator configured to receive the sensor data from the sensor interface (160) to calculate a kinetic state of the leanable vehicle;
a dynamic leanable vehicle model module (240) configured to receive at least one of
1) the kinetic state from the state estimator and
2) external data,
the dynamic leanable vehicle model module (240) is configured to use either the kinetic state, external data or both to calculate a physics model of the leanable vehicle and leanable vehicle driver;
an aggressiveness engine (205) configured to receive
1) the aggressiveness index and
2) the kinetic state, to calculate an aggressiveness factor;
a path follower module (235) configured to receive the kinetic state from the state estimator, the calculated aggressiveness factor from the aggressiveness engine (205) and the external data including at least one future position, in order to calculate the target path;
a model based controller (220) configured to receive and use at least two of:
1) the calculated physics model,
2) calculated aggressiveness factor and
3) calculated target path, along with at least one of a rule based model (225) and machine learning based model (230) to determine the target acceleration;
wherein the data output (110) is configured to receive the calculated target path and determined target acceleration and configured to output the command or instruction to the leanable vehicle driver, the leanable vehicle interface (130) or both to control the leanable vehicle in order to achieve the future desired performance.

5. The system of claim 4, wherein the external data includes at least one of weather data, road condition data, road hazard data, road camber, and road slope.

6. The system of claim 4 or 5, further comprising past performance data that is used by at least one of the model based controller (220), state estimator and dynamic model in order to enhance a future desired performance.

7. The system of at least one of the claims 4 to 6, wherein the external data is located in the cloud.

8. The system of at least one of the claims 4 to 7, wherein the external data is data aggregated from at least one other leanable vehicle.

9. The system of at least one of the claims 4 to 8, wherein the model based controller (220) uses a rule based model (225) or a machine learning based model (230).

10. The system of at least one of the claims 4 to 9, wherein the physics model include at least one selected from the group consisting of: a center of gravity, a wheelbase, a caster angle, a tire width, a wheel inertia, and a leanable vehicle inertia.

11. The system of at least one of the claims 1 to 10, wherein the aggressiveness index is a measure of a level of performance selected by the driver of the leanable vehicle.

12. The system of at least one of the claims 1 to 11, wherein the sensors include at least one selected from the group consisting of: a speed sensor, an inertial sensor, a steering angle sensor, a bank angle sensor, a tire slippage sensor, a tire wear sensor, a tire pressure sensor, a throttle position sensor, a cam position sensor, a gear selection sensor, a bank angle sensor, an oxygen sensor, a weight sensor, an oil pressure sensor, and an oil purity sensor.

13. A method to enhance a driving performance of a leanable vehicle comprising:
receiving input from a driver's operation of the leanable vehicle to a leanable vehicle interface (130), the input including at least one selected from the group consisting of acceleration, direction, bank angle, steering angle and steering angle rate, and output at least one selected from the group consisting of steering, throttling, clutching, shifting and braking;
receiving input from sensors on the leanable vehicle to a sensor interface (160) and outputting sensor data;
calculating a driver behavior to produce a future desired performance using the sensor data received from the sensor interface (160) and data received from the leanable vehicle interface (130), wherein the future desired performance is based on at least one of an aggressiveness index and at least one future position, the future desired performance calculated to attempt to create an optimized performance of the leanable vehicle driver;
providing the leanable vehicle driver, the leanable vehicle or both with at least one of a command and an instruction based on the future desired performance to control the operation of the leanable vehicle.

14. The method of claim 12 or 13, further comprising:
calculating a kinetic state of the leanable vehicle using a state estimator, the calculated kinetic state using sensor data received from a sensor interface (160);
calculating a physics model of the leanable vehicle and driver using at least one of
1) the kinetic state received from the state estimator and
2) external data;
aggressiveness index calculating an aggressiveness factor from
1) an aggressiveness index and
2) the kinetic state;
calculating the target path from the kinetic state, aggressiveness factor and the external data including at least one future position;
calculating the target acceleration using at least one of a rule based model (225) and machine learning based model (230) with at least two of:
1) the physics model,
2) aggressiveness factor and
3) target path; and
calculating the driver behavior necessary to achieve the future desired performance including the target path and target acceleration, the future desired performance calculated to attempt to create an optimized performance of the leanable vehicle; and
outputting at least one of a command and an instruction to the leanable vehicle driver, the leanable vehicle or to both to control operation of the leanable vehicle to result in an enhanced future desired performance of the leanable vehicle.

15. A non-transitory machine-readable medium configured to store instructions and data that when executed by one or more processors on an electronic device, causes the electronic device to perform the following operations, comprising:
receiving input from a driver's operation of the leanable vehicle to a leanable vehicle interface (130), the input including at least one selected from the group consisting of acceleration, direction, bank angle, steering angle and steering angle rate, and output at least one selected from the group consisting of steering, throttling, clutching, shifting and braking;
receiving input from sensors on the leanable vehicle to a sensor interface (160) and outputting sensor data;
calculating a driver behavior to produce a future desired performance using the sensor data received from the sensor interface (160) and data received from the leanable vehicle interface (130) wherein the future desired performance is based on at least one of an aggressiveness index and at least one future position, the future desired performance calculated to attempt to create an optimized performance of the leanable vehicle driver;
providing the leanable vehicle driver with at least one of a command and an instruction based on the future desired performance to control the operation of the leanable vehicle.
